# EUROPÄISCHE PATENTSCHRIFT

(11) **EP 4 077 854 B1**
(45) Veröffentlichungstag und Bekanntmachung des Hinweises auf die Patenterteilung: **29.10.2025**
(21) Anmeldenummer: 20845381.1
(22) Anmeldetag: 15.12.2020
(51) Int. Cl.: E05F 15/614, E05F 15/619, F16H 19/00, F16H 57/022, F16H 57/12

(54) **TÜRANTRIEB FÜR EINE KRAFTFAHRZEUGTÜR ODER KRAFTFAHRZEUGKLAPPE**
DRIVE FOR A VEHICLE DOOR OR LID
ENTRAÎNEMENT DE PORTE VÉHICULE OU OUVRANT DE VÉHICULE

(30) Priorität: 18.12.2019 DE 102019134976
(43) Veröffentlichungstag der Anmeldung: 26.10.2022
(73) Patentinhaber: Kiekert AG, 42579 Heiligenhaus (DE)
(72) Erfinder: BENDEL, Thorsten, 46149 Oberhausen (DE); BERRES, Michael, 51069 Köln (DE); DROST, Bernhard, 46419 Isselburg (DE); STURM, Christian, 47804 Krefeld (DE)
(74) Vertreter: Kiekert AG Patentabteilung
(86) Internationale Anmeldenummer: PCT/DE2020/101064
(87) Internationale Veröffentlichungsnummer: WO 2021/121479

(56) Entgegenhaltungen:
- EP-A1- 1 957 740
- CH-A- 401 494
- DE-A1- 102009 027 509
- DE-A1- 102014 221 854
- DE-A1- 102016 008 017
- DE-A1- 3 016 268
- DE-B- 1 087 020
- DE-U1- 202016 102 402
- GB-A- 2 179 699
- JP-A- S 596 464

## Beschreibung

Die Erfindung betrifft einen Türantrieb für eine Kraftfahrzeugtür oder Kraftfahrzeugklappe, mit einem elektromotorischen Antrieb, einem dem Antrieb nachgeschalteten Getriebe, und mit einem Kraftübertragungselement, welches mit einem Flügel der Kraftfahrzeugtür oder Kraftfahrzeugklappe wirkverbunden ist, wobei ein Abtriebselement des Getriebes und das Kraftübertragungselement durch eine Verzahnung mit Spielausgleich gekoppelt sind.

Türantriebe für Kraftfahrzeugtüren oder Kraftfahrzeugklappen werden in der Praxis vielfältig eingesetzt und beispielhaft in der WO 2017/029163 A1 beschrieben. Bei der auf diese Weise bewegten Kraftfahrzeugtür handelt es sich typischerweise um eine Kraftfahrzeugseitentür, beispielsweise eine Kraftfahrzeugfahrertür oder Kraftfahrzeugbeifahrertür. Die mit Hilfe eines solchen Türantriebes angetriebene Kraftfahrzeugklappe ist im Allgemeinen als Heckklappe, Laderaumklappe, Motorraumklappe, Tankklappe, Fronthaube etc. ausgebildet.

Bei dem Kraftübertragungselement kann es sich um ein Verstellteil handeln, wie es in der zuvor bereits in Bezug genommenen WO 2017/029163 A1 beschrieben wird. Andere Kraftübertragungselemente werden als beispielsweise Zahnräder im weiteren Stand der Technik nach der DE 43 31 384 A1 beschrieben. Bei dem hierdurch bekannten Stellantrieb ist eine Steuereinrichtung vorgesehen, die einen Antriebsmotor derart ansteuert, dass der Antriebsmotor bei jeder Bewegungsumkehr zusätzlich zu einem Verstellweg einen weiteren Verstellweg ausführt, welcher dem mechanischen Gesamtspiel einer auf diese Weise realisierten Übertragungselementeanordnung entspricht. Hierdurch kann eine sehr gute Einstellgenauigkeit bei minimalem Kosten- und Raumbedarf zur Verfügung gestellt werden.

Allerdings wird das Spiel in diesem Zusammenhang von dem gleichsam zusätzlich bewegten Antriebsmotor nach Maßgabe von Signalen der Steuereinrichtung ausgeglichen. Ein solcher Spielausgleich macht sich typischerweise nur an Endpunkten eines Stellweges bemerkbar, ist während des Verstellweges jedoch nicht in der Lage, etwaige Bauteiltoleranzen, Verschleiß und damit verbundenes Spiel auszugleichen. Ein solches Spiel wird von einem Benutzer dadurch oftmals bemerkt und als unangenehm empfunden, weil der motorisch angetriebene Flügel der Kraftfahrzeugtür oder Kraftfahrzeugklappe meistens auch manuell bewegt oder weiterbewegt werden kann.

Das heißt, die Haptik ist bei Türantrieben für Kraftfahrzeugtüren oder Kraftfahrzeugklappen mit Spiel im Antriebsstrang verbesserungsbedürftig. Hinzu kommt, dass das Spiel über die Produktionslebensdauer gesehen durch beispielsweise Verschleiß und unvermeidbare Bauteiltoleranzen noch weiter ansteigen kann und mit zunehmender Gebrauchsdauer folgerichtig als problematisch von einem Benutzer empfunden wird.

Es gibt zwar bereits andere Ansätze dahingehend, bei einer Lastdrehmomentsperre gemäß der DE 10 2013 206 941 A1 die Bewegung zwischen einem Abtriebselement und einem Antriebsrad innerhalb eines Drehwinkelspiels über eine Dämpfungseinrichtung zu dämpfen. Allerdings greift die angesprochene Dämpfung nur im Hinblick auf das Drehwinkelspiel der Lastdrehmomentsperre. Typische Türantriebe arbeiten jedoch oftmals auch mit Zahnstangenantrieben, sodass ein Drehwinkelspiel in diesem Fall nicht beobachtet wird.

Der gattungsbildende Stand der Technik nach der DE 101 14 938 B4 beschäftigt sich mit einer Vorrichtung zum Betätigen einer Automobil-Schwenktür. Die Vorrichtung verfügt zu diesem Zweck über einen Elektromotor, ein Ausgangszahnrad und ein Zahnstangenglied. Außerdem ist eine Gleiteinrichtung vorgesehen, die das Zahnstangenglied abstützt. Zu diesem Zweck ist die Gleiteinrichtung an der Innenseite und/oder der Außenseite des Zahnstangengliedes angeordnet und unterdrückt eine Seitenbewegung des Zahnstangengliedes.

Die bekannte Betätigungsvorrichtung nach der DE 101 14 938 B4 zeigt darüber hinaus ein Vorspannglied, welches von einem Halteglied gehalten wird, um das zuvor bereits angesprochene Zahnstangenglied in Richtung zu einem Ausgangszahnrad eines dem Elektromotor folgenden Getriebes zu beaufschlagen. Mit Hilfe des Vorspanngliedes wird folglich ein Verzahnungseingriff zwischen dem Zahnstangenglied und dem Ausgangszahnrad sichergestellt. Zu diesem Zweck kann das Vorspannglied als Schraubenfeder oder Blattfeder ausgebildet sein oder aus Gummi hergestellt und in einen Presssitz eingepasst werden. Dadurch wird zwar ein Spielausgleich zur Verfügung gestellt, welcher durch das gleichsam federnde Vorspannglied zur Verfügung gestellt wird. Allerdings lassen sich Ermüdungen des Vorspanngliedes auf längeren Zeitskalen, erhöhter Verschleiß usw. oftmals in der Praxis nicht (mehr) ausgleichen. Hier setzt die Erfindung ein.

In der GB 2 179 699 A wird eine Vorrichtung zum kraftbetriebenen Öffnen und Schließen einer Fahrzeugtür. Die Vorrichtung besteht aus einer Antriebsvorrichtung, die die Tür steuert, und einer elektromagnetischen Spule, die einen Riegel steuert. Die Antriebsvorrichtung umfasst einen Motor, eine elektromagnetische Kupplung, eine Zahnstange, ein Verbindungselement, ein Basiselement und eine Antriebswelle. Darüber hinaus umfasst eine elektromagnetische Kupplung, die am oberen Teil der Antriebswelle befestigt ist, eine Abdeckung, eine elektrische Spule, eine magnetisierbare Scheibe und ein Ritzelrad. Auf einer Seite der Zahnstange ist ein Einstellbolzen angeordnet, an dessen Ende sich eine Stahlkugel befindet. Der Einstellbolzen drückt die Zahnstange in Eingriff mit dem Ritzelrad und ermöglicht gleichzeitig ein Kippen der Zahnstange, wobei die Bolzenspitze als Drehpunkt dient.

Aus der Druckschrift DE 10 2014 221854 A1 ist eine Antriebsanordnung für ein Kraftfahrzeug, mit einem Verstellantrieb zum Verstellen einer Komponente, insbesondere einer Heckklappe, der eine Abtriebswelle aufweist, die sich in eine Längsrichtung erstreckt, und mit einem Scharnier, das einen ersten Scharnierarm und einen mit dem Verstellantrieb gegenüber dem ersten Scharnierarm um eine Scharnierachse drehbaren zweiten Scharnierarm aufweist, wobei zum Festlegen des ersten Scharnierarms am Verstellantrieb ein erstes Langloch am ersten Scharnierarm und eine Durchgangsbohrung am Verstellantrieb fluchtend zum ersten Langloch angeordnet sind, wobei sich das erste Langloch in eine erste Raumrichtung erstreckt, und wobei die Durchgangsbohrung ein zweites Langloch ist, das sich in eine zweite Raumrichtung erstreckt. Die vorliegende Erfindung betrifft zudem den Verstellantrieb und das Scharnier für die Antriebsanordnung, ein Kraftfahrzeug mit der Antriebsanordnung sowie ein Verfahren zum Montieren der Antriebsanordnung.

Aus der Druckschrift DE 30 16 268 A1 ist eine Vorrichtung zum motorischen Öffnen und Schließen einer Verkaufsfenster-Klappe an einem Verkaufsfahrzeug, insbesondere für Klappen, die mit ihrem oberen Randteil am Fahrzeugaufbau um eine waagerechte Achse verschwenkbar angelenkt sind. Um die Klappe vom Fahrzeuginnern her öffnen und schließen zu können, ist nahe beider Stirnenden der Klappe je eine, nach innen gerichtete, Schubstange befestigt. Auf der Außenseite der Schubstange ist ein Zahnriemenabschnitt, beispielsweise durch Kleben befestigt, in welchen das als Zahnrad ausgebildete Treibrad des Rädertriebes eingreift. Um in jedem Falle einen Eingriff des Treibrades in die Verzahnung der Schubstange sicherzustellen, ist am Rädertrieb noch ein einstellbares, die Schubstange an das Treibrad andrückendes, vorzugsweise als Druckrolle ausgebildetes Stellglied vorgesehen, das mittels eines Spannexzenters an die Schubstange angelegt werden kann.

Der Erfindung liegt das technische Problem zugrunde, einen derartigen Türantrieb für eine Kraftfahrzeugtür oder Kraftfahrzeugklappe so weiterzuentwickeln, dass ein einwandfreier Spielausgleich im Antriebsstrang des Flügels für die Kraftfahrzeugtür oder Kraftfahrzeugklappe einfach, dauerhaft und unter Berücksichtigung einer robusten Ausführungsform zur Verfügung gestellt wird.

Zur Lösung dieser technischen Problemstellung ist ein gattungsgemäßer Türantrieb für eine Kraftfahrzeugtür oder Kraftfahrzeugklappe im Rahmen der Erfindung dadurch gekennzeichnet, dass das Abtriebselement und/oder das Kraftübertragungselement zum Spielausgleich nicht nur verschiebbar, sondern nach dem Spielausgleich dauerhaft fixierbar ausgebildet sind.

Erfindungsgemäß wird also im Unterschied zum Stand der Technik nach der gattungsbildenden DE 101 14 938 B4 nicht mit einem flexiblen Vorspannglied gearbeitet, welches das Zahnstangenglied oder allgemein Kraftübertragungselement elastisch beaufschlagt. Vielmehr geht die Erfindung so vor, dass das Abtriebselement respektive das Kraftübertragungselement zum Spielausgleich zunächst einmal verschiebbar gegenüber einer Basis, einem Gehäuse respektive dem Flügel der Kraftfahrzeugtür oder Kraftfahrzeugklappe ausgebildet sind. Durch diese Verschiebbarkeit kann der gewünschte Spielausgleich vorgenommen werden. Dabei wird zum Spielausgleich vorteilhaft so vorgegangen, dass der Relativabstand zwischen dem fraglichen Abtriebselement und dem Kraftübertragungselement verändert wird. Alternativ oder zusätzlich kann aber auch zum Spielausgleich der Radialabstand zwischen dem Abtriebselement und dem Kraftübertragungselement verändert werden.

So oder so erfolgt nach dem auf diese Weise vorgenommenen Spielausgleich durch Verschieben des Abtriebselementes respektive des Kraftübertragungselementes ergänzend und nachfolgend eine anschließende dauerhafte Fixierung des jeweils zuvor verschobenen Elementes. Hierbei kann es sich um das Abtriebselement, das Kraftübertragungselement oder beide Elemente handeln.

Durch die zum Ende des Spielausgleiches vorgenommene dauerhafte Fixierung des Abtriebselementes bzw. Kraftübertragungselementes spielen erfindungsgemäß etwaige Ermüdungen des Vorspanngliedes wie beim Stand der Technik nach der DE 101 14 938 B4 ausdrücklich keine Rolle, weil auf ein solches flexibles Vorspannglied erfindungsgemäß und ausdrücklich verzichtet wird. Vielmehr wird der Spielausgleich typischerweise beim Einbau des Türantriebes vorgenommen und nach Fixierung der zuvor verschobenen Elemente beibehalten, und zwar über die gesamte Produktlebensdauer. Grundsätzlich ist es natürlich auch denkbar, dass eine Nachjustage des Spiels oder ein nachgeschalteter Spielausgleich im Zuge einer routinemäßigen Inspektion vorgenommen wird. Im Regelfall erfolgen der Spielausgleich und die Fixierung der Elemente jedoch einmalig beim Zusammenbau.

Zum Spielausgleich kann grundsätzlich auf zweifache Art und Weise vorgegangen werden. So ist es denkbar, dass der Relativabstand zwischen dem Abtriebselement und dem Kraftübertragungselement verändert wird. Dazu mag ein Stellelement zur Verschiebung vorgesehen sein. Bei diesem Stellelement kann es sich um einen Linearstelltrieb, einen Keiltrieb, einen Exzentertrieb oder dergleichen handeln. Um eine besonders kompakte Bauform zu realisieren, ist das Stellelement im Allgemeinen im Innern des Antriebselementes und/oder des Kraftübertragungselementes angeordnet.

Hier hat sich beispielsweise eine Ausführungsform als günstig erwiesen, bei welcher das Stellelement als Exzentertrieb im Innern des Abtriebselementes und/oder des Kraftübertragungselementes ausgebildet ist. Dieser Exzentertrieb, beispielsweise im Innern des Abtriebselementes, mag unschwer und problemlos dafür sorgen, dass im Beispielfall das Abtriebselement mit Hilfe des Exzentertriebes im Innern in Richtung auf das Kraftübertragungselement mit Hilfe des Exzentertriebes oder auch in Gegenrichtung bewegt wird. Das heißt, in diesem Fall beaufschlagt das Stellelement eine Achse des Abtriebselementes und/oder des Kraftübertragungselementes zur Veränderung des Relativabstandes zueinander. Dabei wird meistens so vorgegangen, dass die beiden Achsen von einerseits dem Stellelement und andererseits dem Kraftübertragungselement parallel zueinander ausgerichtet sind.

Bei der zuvor beschriebenen Ausführungsform ist das Kraftübertragungselement typischerweise als Zahnhebel mit Innenverzahnung ausgelegt. Dieser Zahnhebel verfügt meistens über eine gekrümmte Gestaltung oder ist säbelartig ausgelegt, sodass auf diese Weise die Drehbewegung des Abtriebselementes zu einer Schwenkbewegung des gekrümmten Zahnhebels korrespondiert. Der Zahnhebel ist seinerseits als Kraftübertragungselement mit dem Flügel der Kraftfahrzeugtür oder Kraftfahrzeugklappe wirkverbunden. Hierunter ist erfindungsgemäß eine meistens kraftschlüssige, manchmal auch zusätzlich noch formschlüssige Verbindung zu verstehen. Jedenfalls sorgt die zuvor beschriebene Schwenkbewegung des Kraftübertragungselementes bzw. des bogenförmigen oder säbelartigen Zahnhebels dafür, dass auch die hiermit gekoppelte Kraftfahrzeugtür oder Kraftfahrzeugklappe entsprechend verschwenkt wird.

Bei der auf diese Weise erreichten Schwenkbewegung kann es sich um eine solche handeln, die um eine typischerweise in Z-Richtung bzw. Fahrzeug-Hochachsenrichtung orientierte Achse des Kraftübertragungselementes bzw. Zahnhebels und folglich auch des Flügels der Kraftfahrzeugtür oder Kraftfahrzeugklappe erfolgt. So wird man beispielsweise in Verbindung mit einer Kraftfahrzeugseitentür vorgehen. Grundsätzlich kann die Schwenkbewegung aber auch um eine Y-Achse bzw. Fahrzeug-Querachse vorgenommen werden. Dann handelt es sich bei dem Flügel typischerweise um einen solchen als Bestandteil einer Heckklappe.

Das Kraftübertragungselement kann grundsätzlich nicht nur als gekrümmter Zahnhebel, sondern auch als Zahnstange ausgebildet sein. In diesem Fall wird man vergleichbar wie zuvor beschrieben vorgehen. Das heißt, das Abtriebselement mag erneut mit dem Exzentertrieb im Innern ausgerüstet sein, dessen Verstellung dazu korrespondiert, dass das Abtriebselement hinsichtlich seines Relativabstandes zur in diesem Fall realisierten Zahnstange verändert wird.

Neben den zuvor überwiegend beschriebenen Vorgehensweisen zum Spielausgleich dergestalt, dass der Relativabstand zwischen dem Abtriebselement und dem Kraftübertragungselement zueinander verändert wird, zusätzlich besteht auch die Möglichkeit, den Radialabstand zwischen dem besagten Abtriebselement und dem Kraftübertragungselement zu variieren. Eine in diesem Zusammenhang bevorzugte Variante arbeitet dergestalt, dass ein verschiebbares Zahnsegment am Abtriebselement und/oder Kraftübertragungselement vorgesehen ist. Das Zahnsegment ist dabei im Allgemeinen relativ verschiebbar und fixierbar gegenüber dem statisch bzw. starr ausgelegten Abtriebselement und/oder Kraftübertragungselement ausgebildet. Außerdem ist die Auslegung meistens so getroffen, dass das Zahnsegment und das Abtriebselement und/oder Kraftübertragungselement relativ zueinander verdrehbar ausgeführt sind.

In diesem Zusammenhang wird folglich meistens so vorgegangen, dass das Abtriebselement und auch das Kraftübertragungselement regelmäßig ihren Relativabstand zueinander beibehalten. Das heißt, das Abtriebselement und/oder das Kraftübertragungselement sind in diesem Fall statisch respektive starr ausgelegt. Für den Spielausgleich sorgt demgegenüber das verschiebbare Zahnsegment. Dazu ist das Zahnsegment am Abtriebselement und/oder Kraftübertragungselement vorgesehen, meistens verschiebbar an das betreffende Element angeschlossen. Das Zahnsegment kann dazu an einer Abkantung oder dergleichen des Elementes (Abtriebselement und/oder Kraftübertragungselement) geführt werden.

Die Verschiebbarkeit des Zahnsegmentes findet dabei überwiegend so statt, dass beispielsweise das am Kraftübertragungselement angebrachte Zahnsegment gegenüber dem Kraftübertragungselement verschoben werden kann. Da zugleich das Abtriebselement starr ausgelegt ist und mit dem Zahnsegment in Eingriff ist, lässt sich über die radiale Verschiebbarkeit des Zahnsegmentes im Vergleich zum Kraftübertragungselement der Radialabstand zwischen dem Abtriebselement und dem Kraftübertragungselement respektive dem auf dem Kraftübertragungselement gelagerten Zahnsegment verändern. Auf diese Weise kann das Zahnsegment durch eine entsprechende Drehbewegung gegenüber dem Kraftübertragungselement mit seinen Zahnflanken in spielfreien Eingriff mit den korrespondierenden Zahnflanken des Abtriebselementes gebracht werden, und zwar vorzugsweise im Bereich aneinander anliegender Antriebszahnflanken. Generell lässt sich jedenfalls auch auf diese Weise der gewünschte Spielausgleich umsetzen, weil nach dem beschriebenen Vorgang des Verschiebens des Zahnsegmentes das Zahnsegment erneut gegenüber dem Kraftübertragungselement im Beispielfall fixiert wird. Das heißt, in diesem Fall kommt es zum Spielausgleich zu einer Variation des Radialabstandes zwischen dem Abtriebselement und dem Kraftübertragungselement, wie mit Bezug zur Figurenbeschreibung noch näher erläutert wird.

Das Abtriebselement und das Kraftübertragungselement können generell aus Kunststoff, Stahl sowie Kombinationen hergestellt werden. Dadurch lässt sich eine nicht nur robuste, sondern auch gewichtsmäßig optimierte Ausführungsform realisieren. Zur Fixierung des Zahnsegmentes respektive allgemein des Abtriebselementes und/oder des Kraftübertragungselementes kann auf bekannte mechanische Verbindungstechniken, wie beispielsweise eine Schraub-, Kleb-, Klemm- oder Schweißverbindung zurückgegriffen werden.

Im Ergebnis wird ein Türantrieb für eine Kraftfahrzeugtür oder Kraftfahrzeugklappe zur Verfügung gestellt, der konstruktiv einfach und robust aufgebaut ist und einen wirksamen Spielausgleich im Antriebsstrang zur Verfügung stellt. Dadurch wird insgesamt die Haptik verbessert. Außerdem erfährt auch die Lebensdauer eine Verbesserung, weil von vornherein das Spiel im Antriebsstrang minimiert wird. Der Spielausgleich greift dabei zwischen dem Abtrieb bzw. zwischen dem Abtriebselement und dem Kraftübertragungselement, welches seinerseits mit dem Flügel der Kraftfahrzeugtür oder Kraftfahrzeugklappe mechanisch gekoppelt ist. Dadurch kommt es zu einer besonders günstigen Spielfreistellung an der Abtriebsstufe. Hierin sind die wesentlichen Vorteile zu sehen.

Im Folgenden wird die Erfindung anhand einer lediglich ein Ausführungsbeispiel darstellenden Zeichnung näher erläutert; es zeigen
- Fig. 1: den erfindungsgemäßen Türantrieb schematisch in einer ersten Variante,
- Figuren 2A und 2B: Details des Türantriebes entsprechend der Fig. 1 und
- Fig. 3: einen nicht zu Erfindung gehörende Türantrieb.

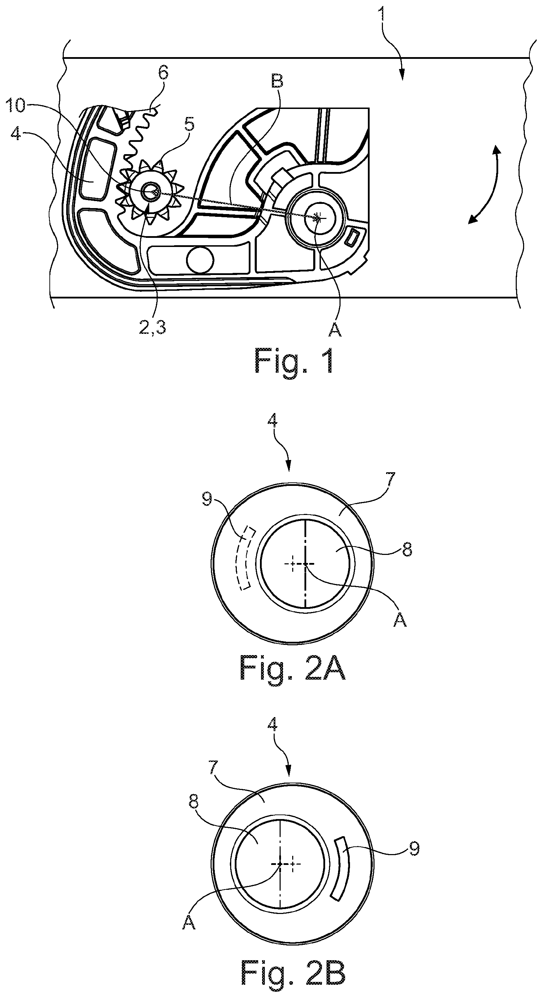

In den Figuren ist ein Türantrieb für eine Kraftfahrzeugtür oder Kraftfahrzeugklappe dargestellt. Von der Kraftfahrzeugtür oder Kraftfahrzeugklappe erkennt man beispielhaft in der Fig. 1 einen zugehörigen Flügel 1. Der nachfolgend noch näher zu beschreibende Türantrieb ist dabei im Bereich einer Achse A angeordnet, um den Flügel 1 und damit die Kraftfahrzeugtür oder Kraftfahrzeugklappe zu verschwenken, und zwar entsprechend einer in der Fig. 1 durch einen Doppelpfeil dargestellten Schwenkbewegung um die Achse A.

Die Achse A kann dabei in Fahrzeug-Hochachsen- bzw. Z-Richtung verlaufen, wenn der Flügel 1 zu einer Kraftfahrzeugseitentür gehört. Dann mag der in der Fig. 1 angedeutete Türantrieb im Bereich eines vorderen Holmes des Flügels 1 der Kraftfahrzeugseitentür angeordnet sein. Es ist aber auch möglich, dass der Flügel 1 zu einer Kraftfahrzeugklappe und insbesondere Kraftfahrzeugheccklappe gehört. In diesem Fall ist die Achse A horizontal in Fahrzeugquer- bzw. Y-Richtung orientiert. In diesem Fall lässt sich der Flügel 1 mit Hilfe des Türantriebes zwischen einer überwiegend vertikalen Orientierung gegenüber einer nicht dargestellten Kraftfahrzeugkarosserie und einer horizontalen oder nahezu horizontalen Orientierung um die Achse A verschwenken.

Der Türantrieb setzt sich im Wesentlichen aus einem nicht explizit dargestellten elektromotorischen Antrieb bzw. Elektromotor 2 und einem dem elektromotorischen Antrieb bzw. Elektromotor 2 nachgeschalteten Getriebe 3 und schließlich einem Kraftübertragungselement 4 zusammen. Von dem dem elektromotorischen Antrieb 2 nachgeschalteten Getriebe 3 ist im Ausführungsbeispiel lediglich ein Abtriebselement 3 des Getriebes 3 dargestellt. Etwaige vorgeschaltete Getrieberäder können ebenfalls vorhanden sein. Grundsätzlich kann das Getriebe 3 aber auch einzig und allein auf das dargestellte Abtriebselement 3 reduziert sein. So oder so sind das Abtriebselement 3 des Getriebes 3 und das bereits angesprochene Kraftübertragungselement 4 durch eine Verzahnung 5, 6 miteinander gekoppelt. Nach dem Ausführungsbeispiel kann die Verzahnung 5, 6 mit einem Spielausgleich ausgerüstet werden, wie dies nachfolgend noch im Detail dargestellt ist.

Die Verzahnung 5, 6 setzt sich aus einer Radialverzahnung 5 des im Ausführungsbeispiel zylindrischen Abtriebselementes 3 einerseits und einer Innenverzahnung 6 am Kraftübertragungselement 4 andererseits zusammen.

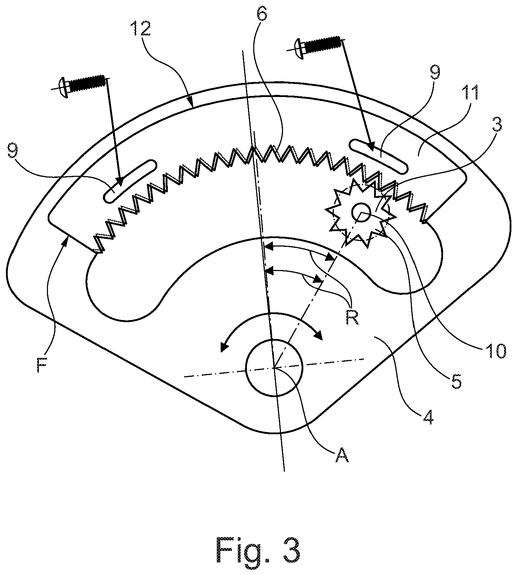

Tatsächlich ist die Innenverzahnung 6 nach dem Ausführungsbeispiel gekrümmt oder säbelartig ausgelegt. Dadurch führen vom elektromotorischen Antrieb 2 auf das Abtriebselement 3 übertragene Drehbewegungen dazu, dass das mit der Innenverzahnung 6 ausgerüstete Kraftübertragungselement 4 die in der Fig. 1 und auch in der Fig. 3 angedeuteten Schwenkbewegungen um die Achse A vollführt. Gleiches gilt dann auch für den Flügel 1, welcher mit dem Kraftübertragungselement 4 wirkverbunden ist, nach dem Ausführungsbeispiel an das Kraftübertragungselement 4 angeschlossen ist. Zu diesem Zweck ist das Kraftübertragungselement 4 als gekrümmter Zahnhebel in der Fig. 1 ausgebildet.

Zum Spielausgleich wird erfindungsgemäß so vorgegangen, dass das Abtriebselement 3 und/oder das Kraftübertragungselement 4 nicht nur verschiebbar, sondern nach dem Spielausgleich dauerhaft fixierbar ausgebildet sind. Dazu wird zunächst auf die erste Ausführungsvariante nach den Einzelfiguren 2A und 2B Bezug genommen. In beiden Figuren erkennt man das Kraftübertragungselement 4 in schematischer Schnittdarstellung, und zwar im Bereich seiner Achse A. Tatsächlich ist nun für die Verschiebung bzw. Verstellung und zum Spielausgleich insgesamt ein Stellelement 7 vorgesehen. Mit Hilfe des Stellelementes 7 wird das Kraftübertragungselement 4 mit seiner Achse A im Hinblick auf einen Relativabstand B zum Abtriebselement 3 respektive dessen Achse 10 variiert.

Dazu ist das Stellelement 7 im Ausführungsbeispiel nach den Figuren 2A und 2B als Exzenter 7 ausgebildet. Der Exzenter 7 umschließt dabei eine die Achse A definierende Abtriebswelle 8 des Kraftübertragungselementes 4. Außerdem ist noch eine Montageöffnung 9 im Stellelement bzw. Exzentertrieb 7 realisiert, über die der Exzentertrieb 7 verstellt werden kann.

Tatsächlich korrespondiert die Funktionsstellung in der Fig. 2A dazu, dass entsprechend der Fig. 1 das Kraftübertragungselement 4 einen maximalen Relativabstand B zwischen den beiden Achsen 10, A aufweist. Demgegenüber korrespondiert die Funktionsstellung in der Fig. 2B dazu, dass der Relativabstand B zwischen einerseits der Achse A des Kraftübertragungselementes 4 und andererseits der Achse 10 des Abtriebselementes 3 einen Minimalwert einnimmt. Auf diese Weise kann das Spiel zwischen einerseits der Radialverzahnung 5 des Abtriebselementes 3 und andererseits der Innenverzahnung 6 des Kraftübertragungselementes 4 eingestellt und ausgeglichen werden. Nach Einstellen des Spieles bzw. nach Verschwenken des Exzenters 7 über die Montageöffnung 9 wird im Beispielfall das Kraftübertragungselement 4 fixiert. Dazu kann eine die Position des Exzentertriebes 7 festlegende Schraube in die Montageöffnung 9 eingreifen. Man erkennt, dass mit Hilfe des Stellelementes bzw. des Exzentertriebes 7 im Ausführungsbeispiel die Achse A des Kraftübertragungselementes 4 zur Veränderung des Relativabstandes B beaufschlagt wird. Die beiden Achsen A, 10 verlaufen dabei insgesamt parallel zueinander (und nach dem Ausführungsbeispiel senkrecht zur Zeichenebene), damit durch den vorgenommenen Spielausgleich der Eingriff der beiden Verzahnungen 5, 6 nach wie vor gewährleistet ist.

Im Rahmen der nicht zur Erfindung gehörenden Ausführungsform nach der Fig. 3 ist erneut das Kraftübertragungselement 4 verschiebbar gegenüber dem Abtriebselement 3 ausgebildet. Dazu ist das Kraftübertragungselement 4 mit einem darauf gelagerten Zahnsegment 11 ausgerüstet, welches die zuvor bereits beschriebene Innenverzahnung 6 trägt. Das Zahnsegment 11 lässt sich gegenüber dem Kraftübertragungselement 4 verschieben, welches im Vergleich hierzu ortsfest ausgelegt ist. Durch die Verschiebung des Zahnsegmentes 11 gegenüber dem Kraftübertragungselement 4 und folglich auch gegenüber dem Abtriebselement 3 wird an dieser Stelle der erforderliche Spielausgleich vorgenommen. Nach Verschieben des Zahnsegmentes 11 kann dieses erneut fixiert werden, und zwar mit Hilfe von in der Fig. 3 angedeuteten Schrauben, die in diesem Fall erneut Montageöffnungen 9 durchgreifen können.

Die Verschiebung des Zahnsegmentes 11 gegenüber dem Kraftübertragungselement 4 erfolgt dadurch, dass eine in der Fig. 3 angedeutete Kraft F am Zahnsegment 11 angreift und das Zahnsegment 11 radial gegenüber dem Kraftübertragungselement 4 verschiebt. Dabei wird das Zahnsegment 11 mit Hilfe einer Führung 12 am Kraftübertragungselement 4 geführt. Das heißt, das Zahnsegment 11 und das Kraftübertragungselement 4 sind relativ zueinander verdrehbar ausgebildet. Tatsächlich korrespondiert eine Beaufschlagung des Zahnsegmentes 11 mit der Kraft F dazu, dass ein Radialabstand R zwischen dem Abtriebselement 3 und dem Kraftübertragungselement 4 respektive dem verschiebbar auf dem Kraftübertragungselement 4 gelagerten Zahnsegment 11 verändert wird. Betrachtet man das Ausführungsbeispiel nach der Fig. 3, so korrespondiert die Beaufschlagung mit der Kraft F dazu, dass eine von der Achse A ausgehende Mittelachse des Zahnsegmentes 11 nach rechts in eine strichpunktierte Position überführt wird.

Da bei diesem Vorgang das Abtriebselement 3 mit seiner Achse 10 und folglich der Radiusvektor zur Achse A des Kraftübertragungselementes 4 ortsfest verbleiben, korrespondiert die Beaufschlagung mit der Kraft F des Zahnsegmentes 11 dazu, dass der Radialabstand R zwischen dem Abtriebselement 3 und dem Kraftübertragungselement 4 respektive dem hierauf gelagerten Zahnsegment 11 verringert wird, wie man anhand der Fig. 3 nachvollziehen kann. Umgekehrt korrespondiert eine Beaufschlagung des Zahnsegmentes 11 in der umgekehrten Richtung dazu, dass der fragliche Radialabstand R vergrößert wird.

Jedenfalls wird im Rahmen des zweiten Ausführungsbeispiels nach der Fig. 3 so gearbeitet, dass zum Spielausgleich der Radialabstand R zwischen dem Abtriebselement 3 und dem Kraftübertragungselement 4 verändert wird. Nach erfolgtem Spielausgleich wird erneut das Kraftübertragungselement und konkret das hierauf drehbar gelagerte Zahnsegment 11 fixiert. Dabei wird das Zahnsegment 11 mit Hilfe der dargestellten Führung 12 jeweils drehbar bzw. schwenkbar um die Achse A gegenüber dem Kraftübertragungselement 4 geführt.

Das Abtriebselement 3 und das Kraftübertragungselement 4 respektive das Zahnsegment 11 können aus Kunststoff, Stahl sowie Kombinationen hergestellt werden. Dadurch lassen sich bedarfsweise kostengünstige, leichte und geräuscharme Werkstoffpaarungen umsetzen. Das gilt insbesondere dann, wenn die Paarung Stahl/Kunststoff beobachtet und realisiert wird.

### Bezugszeichenliste:

- 1: Flügel
- 2: elektromotorischer Antrieb bzw. Elektromotor
- 3: Getriebe, Abtriebselement
- 4: Kraftübertragungselement
- 5: Radialverzahnung
- 5, 6: Verzahnung
- 6: Innenverzahnung
- 7: Stellelement, Exzenter, Exzentertrieb
- 8: Abtriebswelle
- 9: Montageöffnung
- 10: Achse
- 11: Zahnsegment
- 12: Führung
- A: Achse
- B: Relativabstand
- F: Kraft
- R: Radialabstand

## Patentansprüche

1. Türantrieb für eine Kraftfahrzeugtür oder Kraftfahrzeugklappe, mit einem elektromotorischen Antrieb (2), einem dem Antrieb (2) nachgeschalteten Getriebe (3), und mit einem Kraftübertragungselement (4), welches mit einem Flügel (1) der Kraftfahrzeugtür oder Kraftfahrzeugklappe wirkverbunden ist, wobei ein Abtriebselement (3) des Getriebes (3) und das Kraftübertragungselement (4) durch eine Verzahnung (5, 6) mit Spielausgleich gekoppelt sind, wobei zum Spielausgleich der Relativabstand (B) zwischen dem Abtriebselement (3) und dem Kraftübertragungselement (4) verändert wird, wobei ein Stellelement (7) zur Verschiebung vorgesehen ist, wobei das Stellelement (7) im Innern des Kraftübertragungselementes (4) angeordnet ist, wobei das Stellelement (7) als Exzenter ausgebildet ist, wobei das Kraftübertragungselement (4) zum Spielausgleich nicht nur verschiebbar, sondern nach dem Spielausgleich dauerhaft fixierbar ausgebildet sind, **dadurch gekennzeichnet, dass** der Exzenter (7) eine durch eine Abtriebswelle (8) des Kraftübertragungselementes (4) definierte Achse (A) umschließt, wobei der Exzenter (7) die Achse (A) des Kraftübertragungselementes (4) zur Veränderung des Relativabstandes (B) zu einer Achse (10) des Abtriebselementes (3) beaufschlagt.

2. Antrieb nach Anspruch 1, **dadurch gekennzeichnet, dass** das Kraftübertragungselement (4) als Zahnhebel mit einer Innenverzahnung (5) ausgeführt ist.

3. Antrieb nach einem der Ansprüche 1 oder 2, **dadurch gekennzeichnet, dass** ein verschiebbares Zahnsegment (11) am Abtriebselement (3) und/oder Kraftübertragungselement (4) vorgesehen ist.

4. Antrieb nach Anspruch 2, **dadurch gekennzeichnet, dass** das Zahnsegment (11) relativ verschiebbar und fixierbar gegenüber dem Abtriebselement (3) und/oder Kraftübertragungselement (4) ausgebildet ist.

5. Antrieb nach einem der Ansprüche 3 oder 4, **dadurch gekennzeichnet, dass** das Zahnsegment (11) und das Abtriebselement (3) und/oder Kraftübertragungselement (4) relativ zueinander verdrehbar ausgeführt sind.

6. Antrieb nach einem der vorherigen Ansprüche, **dadurch gekennzeichnet, dass** das Abtriebselement (3) und das Kraftübertragungselement (4) aus Kunststoff, Stahl sowie Kombinationen hergestellt sind.

## Claims

1. Door drive for a motor vehicle door or a motor vehicle flap, comprising an electric motor drive (2), a gear (3) connected downstream of the drive (2), and a force-transmission element (4) which is operatively connected to a leaf (1) of the motor vehicle door or motor vehicle flap, an output element (3) of the gear (3) and the force-transmission element (4) being coupled by a toothing (5, 6) with play compensation, the relative distance (B) between the output element (3) and the force-transmission element (4) being changed for play compensation, a control member (7) being provided for movement, the control member (7) being arranged inside the force-transmission element (4), the control member (7) being designed as an eccentric, the force-transmission element (4) being designed not only to be movable for play compensation but also to be permanently fixable after play compensation, **characterized in that** the eccentric (7) surrounds an axis (A) defined by an output shaft (8) of the force-transmission element (4), the eccentric (7) acting on the axis (A) of the force-transmission element (4) to change the relative distance (B) to a shaft (10) of the output element (3).

2. Drive according to claim 1, **characterized in that** the force-transmission element (4) is designed as a toothed lever which has an internal toothing (5).

3. Drive according to either claim 1 or claim 2, **characterized in that** a movable toothed segment (11) is provided on the output element (3) and/or the force-transmission element (4).

4. Drive according to claim 2, **characterized in that** the toothed segment (11) is designed to be movable and fixable relative to the output element (3) and/or the force-transmission element (4).

5. Drive according to either claim 3 or claim 4, **characterized in that** the toothed segment (11) and the output element (3) and/or the force-transmission element (4) are designed to be rotatable relative to one another.

6. Drive according to any of the preceding claims, **characterized in that** the output element (3) and the force-transmission element (4) are made of plastics material, steel, and combinations thereof.

## Revendications

1. Entraînement de porte pour une porte de véhicule automobile ou un élément de type clapet de véhicule automobile, comportant un entraînement (2) par moteur électrique, une transmission (3) montée en aval de l'entraînement (2), et comportant un élément de transmission de force (4) qui est en liaison active avec un battant (1) de la porte de véhicule automobile ou de l'élément de type clapet de véhicule automobile, dans lequel un élément de sortie (3) de la transmission (3) et l'élément de transmission de force (4) sont accouplés par une denture (5, 6) avec compensation de jeu, dans lequel la distance relative (B) entre l'élément de sortie (3) et l'élément de transmission de force (4) est modifiée pour la compensation de jeu, dans lequel un élément de réglage (7) est prévu pour le déplacement, dans lequel l'élément de réglage (7) est disposé à l'intérieur de l'élément de transmission de force (4), dans lequel l'élément de réglage (7) est réalisé sous la forme d'un excentrique, dans lequel l'élément de transmission de force (4) est réalisé de manière à pouvoir non seulement être déplacé pour la compensation de jeu, mais aussi à pouvoir être fixé de manière durable après la compensation de jeu, **caractérisé en ce que** l'excentrique (7) entoure un axe (A) défini par un arbre de sortie (8) de l'élément de transmission de force (4), dans lequel l'excentrique (7) sollicite l'axe (A) de l'élément de transmission de force (4) pour la modification de la distance relative (B) par rapport à un axe (10) de l'élément de sortie (3).

2. Entraînement selon la revendication 1, **caractérisé en ce que** l'élément de transmission de force (4) est réalisé sous forme de levier denté comportant une denture intérieure (5).

3. Entraînement selon l'une des revendications 1 ou 2, **caractérisé en ce qu'un** segment denté (11) pouvant être déplacé est prévu sur l'élément de sortie (3) et/ou l'élément de transmission de force (4).

4. Entraînement selon la revendication 2, **caractérisé en ce que** le segment denté (11) est réalisé de manière à pouvoir être déplacé et fixé de manière relative par rapport à l'élément de sortie (3) et/ou à l'élément de transmission de force (4).

5. Entraînement selon l'une des revendications 3 ou 4,
**caractérisé en ce que** le segment denté (11) et l'élément de sortie (3) et/ou l'élément de transmission de force (4) sont réalisés de manière à pouvoir tourner les uns par rapport aux autres.

6. Entraînement selon l'une des revendications précédentes,
**caractérisé en ce que** l'élément de sortie (3) et l'élément de transmission de force (4) sont fabriqués à partir de plastique, d'acier ainsi que de combinaisons de ceux-ci.
